# EUROPEAN PATENT SPECIFICATION

(11) **EP 0 756 126 B1**
(45) Date of publication and mention of the grant of the patent: **25.08.1999**
(21) Application number: 96305517.3
(22) Date of filing: 26.07.1996
(51) Int. Cl.: F16L 37/092

(54) **Tube coupling**
Rohrkupplung
Raccord de tuyaux

(30) Priority: 28.07.1995 GB 9515473
(43) Date of publication of application: 29.01.1997
(73) Proprietor: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(56) References cited:
- EP-A- 0 268 251
- EP-A- 0 587 433
- EP-A- 0 628 760
- US-A- 1 428 949
- US-A- 4 188 051
- US-A- 5 230 539

## Description

This invention relates to tube couplings in which a coupling body has an open ended throughway to receive an end of a tube with a locking device in the coupling body to engage and hold the tube in the body for flow of fluid between the tube and throughway in the body.

Such tube couplings are commonly used in apparatus for dispensing drinks such as colas, other carbonated drinks and beers and ciders. Any gaps or pockets however shall provide areas where fluids can accumulate and stagnate unless the apparatus is very effectively cleaned which is difficult in the case of very narrow pockets which may result from the construction of tube couplings. Where fluids accumulate over a period of time they inevitably "go off" and the resulting material formed harms the taste of the fresh fluids being dispensed through the system and also creates a health risk.

US-A-4188051, which is considered to be the closest prior art document, discloses a tube coupling comprising a body having a through way to receive a tube, an abutment shoulder against which the inner end of the tube may be seated, a chamber around the open end of the tube in which a sealing ring is located and a locking device for locking the tube in the coupling having resilient arms for engaging the outer surface of the tube and engaging in an internal frusto conical cam surface formed in a nut screwed into the end of the coupling. A sleeve is a press fit in a reduced diameter part of the through way to engage in and provide internal support for the tube. The tube is inserted in the coupling until it bottoms on the shoulder and is engaged with the resilient arms of the locking device. Slight withdrawal motion of the tube either by a mechanical pull or by action of internal fluid pressure will cause the locking device to move slightly outwardly in the coupling pressing the arms of the device into the frusto conical cam surface to grip and hold the tube in the couplings.

Fluid may leak from one end of the tube into the chamber formed to one side of the sealing ring which drives the ring against the locking device to hold the locking device in an engagement with the tube. As indicated above, on accumulation of fluids in such spaces can be disadvantageous and it is an object of the present invention to eliminate or minimise any voids in the tube coupling where such fluids may accumulate.

EP-A-0268251 discloses a tube joint for connecting a multi-walled tube assembly, typically a double-walled tube assembly, including a plurality of tubes defining a plurality of fluid passages and a coupling body in which the tubes are connected having multiple passages for connection to the respective tubes. The coupling body includes a central passageway in which a sleeve projecting from an inner tube of a double-walled tube assembly engages. The end of the sleeve has an encircling inner groove in which a O-ring seal is mounted to seal with the wall of the passageway in the connector body to prevent fluid from the inner tube communicating with the fluid of the outer tube. The outer tube is sealed to the joint body by an encircling annular seal in the joint body and the tube assembly is held in the joint body by a chuck arrangement including an angled biting ring which engages the outer surface of the outer tube of the assembly. The tube assembly does not have to make a slight withdrawal movement to engage the gripping action of the chuck as the seal fills the void between the tube and joint body to eliminate any void in which the fluid could accumulate.

This invention provides a tube coupling comprising a coupling body having a throughway open at one end to receive a tube, the diameter of the throughway increasing towards said open end at a first step to form a first enlarged diameter portion to receive a tube and at a second step to form a second, further enlarged diameter portion to receive a tube locking device which is engaged with the tube by a slight withdrawal movement of the tube from the coupling body to lock and hold the tube in the coupling body, and a thin wall sleeve having one end engageable in the throughway beyond said first step and the other end engageable in tube to be located in the coupling body so that, in use, the sleeve extends from the tube past the first step into the throughway, wherein said one end of the sleeve is slidable in the throughway and has an integral encircling annular seal engaging the throughway so that sealing engagement of the tube and throughway is maintained with said slight outward movement of the sleeve with the tube required to engage said locking device with the tube whereby ingress of fluids between the sleeve and throughway is prevented.

According to a further feature of the invention, the sleeve may have an integral annular flange formed partway along the sleeve from said one end to locate between the end of the tube and the first step.

In either of the above arrangements, the portion of the sleeve to engage in the tube may be formed with one or more integral annular barbs encircling the sleeve to engage and retain the sleeve in the tube and prevent loss of fluid from the tube past the sleeve.

More specifically, the sleeve may have two encircling barb shaped projections in spaced locations along the sleeve to engage the inner surface of the tube.

Also in any of the above arrangements, the length of the sleeve engaged in the tube may be such that the end of the tube is visible at the open end of the coupling body when a transparent or translucent sleeve material is used for the tube so that the position of the end of the sleeve will indicate whether or not the tube has been fully engaged in the tube coupling.

In one specific embodiment the tube locking device may comprise a collet having an annular portion and a plurality of resilient fingers projecting into the coupling body and the coupling body has a tapered internal cam surface reducing it in diameter towards the open end with which the fingers of the collet are engageable to be compressed against the surface of the tube to lock the tube in the coupling body.

The following is a description of the specific embodiment of the invention, reference being made to the accompanying drawings in which:
Figure 1 is a sectional view through a known form of tube coupling having a collet and locking device with a tube fully inserted in the coupling prior to engagement of the locking device;
Figure 2 is a sectional view through the coupling of Figure 1 showing the collet and tube retracted slightly to engage the gripping action of the collet on the tube;
Figure 3 is a similar view to Figure 1 embodying a sleeve to isolate potential but traps from the throughway and tube prior to engagement of the collet locking device; and
Figure 4 is a similar view to Figure 3 showing the tube retracted slightly to engage the collet form locking device with the tube.

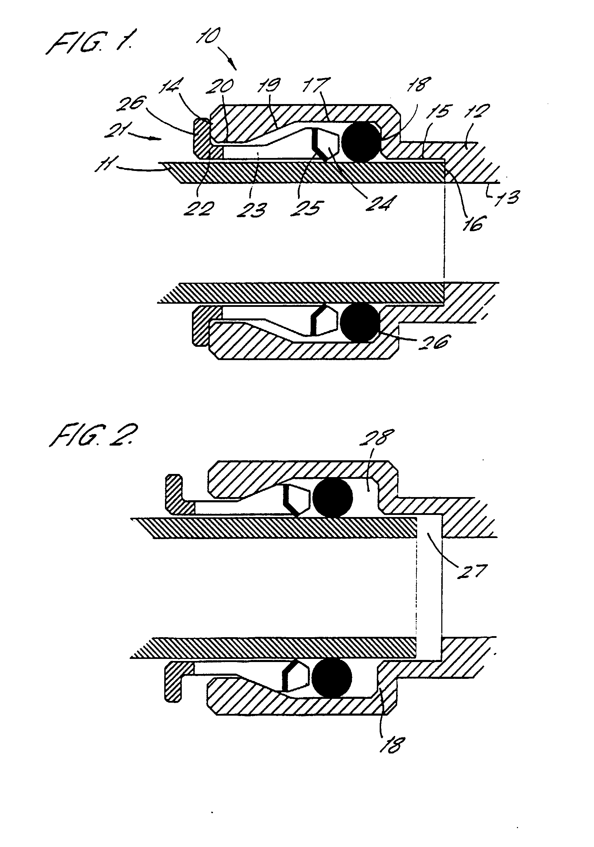

Referring firstly to Figure 1 of the drawings, there is shown a tube coupling indicated generally at 10 for a tube 11. The coupling comprises a coupling body 12 through which a throughway 13 extends to an open end 14. Towards the open end, the throughway is formed with a first enlarged diameter portion 15 at a step 16 facing towards the open end of the coupling body and a second further enlarged diameter portion 17 at a second step 18 also facing towards the open end of the coupling body. The enlarged diameter portion 17 is formed with a tapered cam surface 19 reducing towards the open end of the coupling body and terminating in a short plane cylindrical entry 20 at the open end of the coupling body.

The enlarged diameter portion of the coupling body contain a collet indicated at 21 for locking the tube 11 in the coupling body. The collet has an annular portion 22 formed with resilient fingers 23 projecting axially into the throughway and having heads 24 at their distal ends incorporating angled teeth 25 to grip and engage the tube. The collet is completed by an out turned head or flange 26 encircling the annular part of the collet which overlies the end 14 of the coupling body around the open end of the throughway.

A tube 11 to be locked in the coupling body is inserted into the coupling body through the collet into the first enlarged portion of the throughway 15 and the end of the tube is engaged with the step 16. An O-ring seal at 26 is mounted in the further enlarged portion of the throughway against the step 18 to seal between the throughway step and surface of the tube to prevent loss of fluid from the coupling body.

The teeth or barbs 25 on the heads 24 of the collet have an initial grip with the surface of the tube so that when the tube is retracted slightly after insertion into the coupling body either manually or as a result of fluid pressure within the tube/throughway, the heads 24 of the collet are drawn into engagement with the tapered cam surface 19 which compresses the heads against the surface of the tube to provide a gripping action with the tube sufficient to prevent the tube from being extracted from the coupling body. As a result of the slight retraction of the tube, a small gap 27 is formed between the end of the tube and step 16 and there is also a void 28 between the seal 26 and step 18 in which fluids/solids can be trapped and "go off" if allowed to.

In accordance with the present invention, a thin wall flexible sleeve 30 is mounted in the tube end and has a portion 31 which projects into the throughway 13 to bridge across the step 16 between the tube and sleeve. A tube 30 has two spaced annular barb cross section projections 32 on its outer surface shaped to hold the sleeve in the tube after insertion of the sleeve in the tube. The sleeve is formed with an outwardly projecting integral annular flange 34 which overlies the end of the tube to engage between the tube and step 16 and to ensure that the portion 31 of the tube which engages in the throughway is sufficiently long to remain in engagement with the throughway even after the tube and sleeve have retracted slightly to engage the gripping action of the collet as described above.

The wall thickness of the portion of the sleeve projecting from the flange 34 into the throughway is slightly less than the wall thickness of the sleeve within the tube to accommodate an annular integral seal 35 formed around the outer side of the open end 36 of the sleeve in the throughway. The seal engages the inner surface of the throughway to prevent penetration of fluids between the sleeve and throughway.

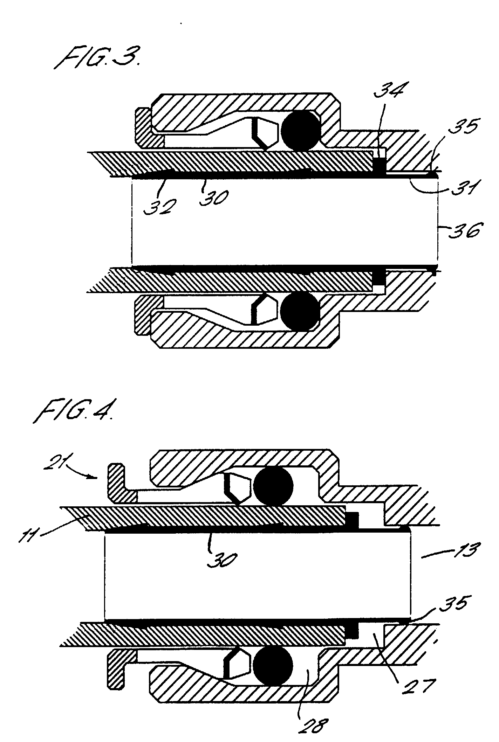

As can be seen in Figure 4, when the tube 11 and sleeve 30 have retracted slightly to engage the gripping action of the collet with the tapered cam surface in the coupling body, the sleeve slides with the tube partially out of the throughway 13 but leaving an end portion of the sleeve with the annular seal 35 still in effective sealing engagement with the throughway to prevent entry of fluids into the voids 27 and 28 created by the movement of the tube. Thus a smooth continuous surface is preserved between the tube and throughway with no gaps or voids where fluids may accumulate.

The length of the sleeve 30 within the tube 11 is chosen so that the end of the sleeve in the tube is visible from outside the coupling body if transparent or translucent tube materials are used so that the location of the end of the sleeve can be used to judge whether the end of the tube has been fully inserted in the coupling body or not.

Although the above arrangement still retains an O-ring seal, it may be omitted and the sleeve relied upon to provide the sealing function between the tube and coupling body.

## Claims

1. A tube coupling comprising a coupling body (12) having a throughway (13) open at one end (20) to receive a tube (11), the diameter of the throughway increasing towards said open end at a first step (16) to form first enlarged diameter portion (15) to receive the tube (11) and at a second step (18) to form a second, further enlarged diameter portion (17) to receive a tube locking device (21) which is engaged with the tube by a slight withdrawal movement of the tube from the coupling body to lock and hold the tube in the coupling body, and a thin wall sleeve (30) having one end (31) engageable in the throughway beyond said first step and the other end engageable in tube to be located in the coupling body so that, in use, the sleeve extends from the tube past the first step (16) into the throughway, characterised in that said one end (31) of the sleeve (30) is slidable in the throughway and has an integral encircling annular seal (35) engaging the throughway so that sealing engagement of the tube and throughway is maintained with said slight outward movement of the sleeve with the tube required to engage said locking device with the tube whereby ingress of fluids between the sleeve and throughway is prevented.

2. A tube coupling as claimed in claim 1, characterised in that the sleeve (30) has an integral annular flange (34) formed partway along the sleeve from said one end to locate between the end of the tube and the first step (16).

3. A tube coupling as claimed in claim 1 or claim 2, characterised in that the portion of the sleeve to engage in the tube is formed with one or more integral annular barbs encircling the sleeve to engage in the tube and retain the sleeve in the tube and prevent loss of fluid from the tube past the sleeve.

4. A tube coupling as claimed in claim 3, characterised in that the sleeve (30) has two encircling barb shaped projections in spaced locations along the sleeve to engage the inner surface of the tube.

5. A tube coupling as claimed in any of the preceding claims, characterised in that the length of the sleeve (30) engaged in the tube is such that the end of the tube is visible at the open end of the coupling body when a transparent or translucent sleeve material is used for the tube so that the position of the end of the sleeve will indicate whether or not the tube has been fully engaged in the tube coupling.

6. A tube coupling as claimed in any of the preceding claims, characterised in that the tube locking device comprises a collet (21) having an annular portion (22) and a plurality of resilient fingers projecting (23) into the coupling body and the coupling body has a tapered internal cam surface (19) reducing it in diameter towards the open end (20) with which the fingers of the collet are engageable to be compressed against the surface of the tube to lock the tube in the coupling body.

## Patentansprüche

1. Rohrkupplung mit:
einem Kupplungsgehäuse (12) mit einem Durchgangsweg (13), der an einem Ende (20) zur Aufnahme eines Rohres (11) geöffnet ist, wobei der Durchmesser des Durchgangswegs hin zu dem offenen Ende an einer ersten Stufe (16) zur Aufnahme des Rohrs (11) unter Ausbildung eines ersten Abschnitts (15) mit vergrößertem Durchmesser und an einer zweiten Stufe (18) zur Aufnahme einer Rohrverriegelvorrichtung (21), die mit dem Rohr mit einer leichten Rückziehbewegung des Rohrs aus dem Kupplungsgehäuse in Eingriff gelangt, um das Rohr in dem Kupplungsgehäuse zu verriegeln und festzuhalten, unter Ausbildung eines zweiten Abschnitts (17) mit weiter vergrößertem Durchmesser ansteigt, und mit einer dünnen Wandbuchse (30), deren eines Ende (31) in den Durchgangsweg jenseits der ersten Stufe eingreifen kann, und deren anderes Ende mit dem Rohr in Eingriff gebracht werden kann, um bei der Verwendung so an dem Kupplungskörper angeordnet zu sein, daß sich die Buchse von dem an der ersten Stufe (16) vorbeigelangten Rohr in den Durchgangsweg hinein erstreckt,
dadurch **gekennzeichnet**, daß
das eine Ende (31) der Buchse (30) im Durchgangsweg gleiten kann und eine einstückig ausgebildete, umgreifende ringförmige Dichtung (35) hat, die mit dem Durchgangsweg so in Eingriff steht, daß der dichtende Eingriff des Rohres und des Durchgangswegs bei der leichten Auswärtsbewegung der Buchse mit dem Rohr beibehalten wird, die benötigt wird, um die Verriegelungsvorrichtung mit dem Rohr in Eingriff zu bringen, wobei das Eindringen von Fluiden zwischen die Buchse und den Durchgangsweg vermieden wird.

2. Rohrkupplung nach Anspruch 1,
dadurch **gekennzeichnet**, daß die Buchse (31) einen einstückig ausgebildeten ringförmigen Flansch (34) hat, der beabstandet von einem Ende der Buchse ausgebildet ist, so daß er zwischen dem Ende des Rohrs und der ersten Stufe (16) angeordnet ist.

3. Rohrkupplung nach Anspruch 1 oder 2,
dadurch **gekennzeichnet**, daß der Abschnitt der Buchse für den Eingriff mit dem Rohr mit einem oder mehreren einstückigen ringförmigen Widerhaken ausgestattet ist, die die Buchse umgeben, um in das Rohr einzugreifen und die Buchse in dem Rohr zu halten, und um den Verlust von Fluid aus dem Rohr hinter der Buchse zu vermeiden.

4. Rohrkupplung nach Anspruch 3,
dadurch **gekennzeichnet**, daß die Buchse (30) zwei umgreifende widerhakenförmige Vorsprünge an beabstandeten Stellen entlang der Buchse hat, die in die innere Oberfläche des Rohrs eingreifen.

5. Rohrkupplung nach einem der vorangehenden Ansprüche,
dadurch **gekennzeichnet**, daß die Länge der Buchse (30), die in das Rohr eingreift, so ist, daß das Ende des Rohrs an dem offenen Ende des Kupplungsgehäuses sichtbar ist, wenn ein durchsichtiges oder durchscheinendes Buchsenmaterial für das Rohr verwendet wird, so daß die Position des Endes der Buchse anzeigt, ob das Rohr vollständig in die Rohrkupplung eingreift oder nicht.

6. Rohrkupplung nach einem der vorangehenden Ansprüche,
dadurch **gekennzeichnet**, daß die Rohrverriegelungsvorrichtung eine Spannhülse (21) mit einem ringförmigen Abschnitt (22) und einer Mehrzahl federnder Finger (23) umfaßt, die sich in das Kupplungsgehäuse erstrecken, und daß das Kupplungsgehäuse eine geneigte innere Eingriffsoberfläche (19) hat, die sich in ihrem Durchmesser hin zu dem offenen Ende (30) verringert, mit der die Finger der Spannpatrone in Eingriff gebracht werden können, um gegen die Oberfläche des Rohrs gedrückt zu werden, um das Rohr in dem Kupplungsgehäuse zu verriegeln.

## Revendications

1. Accouplement de tubes comprenant un corps d'accouplement (12) comportant un passage traversant (13) ouvert à une extrémité (20) de façon à recevoir un tube (11), le diamètre du passage traversant augmentant en direction de ladite extrémité ouverte au niveau d'un premier gradin (16), afin de former une première partie de diamètre agrandi (15) destinée à recevoir le tube (11), et au niveau d'un second gradin (18), afin de former une seconde autre partie de diamètre agrandi (17) destinée à recevoir un dispositif de verrouillage de tube (21) qui coopère avec le tube par un léger mouvement de retrait du tube du corps d'accouplement, afin de verrouiller et de tenir le tube dans le corps d'accouplement, et une douille à fine paroi (30) dont une extrémité (31) peut être insérée dans le passage traversant au-delà dudit premier gradin et dont l'autre extrémité peut être insérée dans le tube à positionner dans le corps d'accouplement de sorte que, en fonctionnement, la douille s'étend depuis le tube au-delà du premier gradin (16) à l'intérieur du passage traversant, caractérisé en ce que ladite une extrémité (31) de la douille (30) peut coulisser dans le passage traversant et possède un joint annulaire périphérique d'un seul tenant (35) en contact avec le passage traversant de sorte qu'un contact étanche du tube et du passage traversant est maintenu à l'aide dudit léger mouvement vers l'extérieur de la douille avec le tube nécessaire pour faire coopérer ledit dispositif de verrouillage avec le tube, ce par quoi toute entrée de fluides entre la douille et le passage traversant est empêchée.

2. Accouplement de tubes selon la revendication 1, caractérisé en ce que la douille (30) comporte une collerette annulaire d'un seul tenant (34) formée partiellement le long de la douille depuis ladite une extrémité de façon à être située entre l'extrémité du tube et le premier gradin (16).

3. Accouplement de tubes selon la revendication 1 ou la revendication 2, caractérisé en ce que la partie de la douille destinée à être insérée dans le tube comprend une ou plusieurs barbes annulaires d'un seul tenant encerclant la douille de façon à s'insérer dans le tube et retenir la douille dans le tube, et à empêcher toute perte de fluide du tube au-delà de la douille.

4. Accouplement de tubes selon la revendication 3, caractérisé en ce que la douille (30) comporte deux saillies en forme de barbes périphériques à des emplacements espacés le long de la douille destinées à entrer en contact avec la surface intérieure du tube.

5. Accouplement de tubes selon l'une quelconque des revendications précédentes, caractérisé en ce que la longueur de la douille (30) insérée dans le tube est telle que l'extrémité du tube est visible au niveau de l'extrémité ouverte du corps d'accouplement lorsque l'on utilise un matériau de douille transparent ou translucide pour le tube, si bien que la position de l'extrémité de la douille indiquera si le tube a été complètement inséré dans l'accouplement de tubes ou non.

6. Accouplement de tubes selon l'une quelconque des revendications précédentes, caractérisé en ce que le dispositif de verrouillage de tube comprend une douille de serrage (21) comportant une partie annulaire (22) et une pluralité de doigts élastiques (23) faisant saillie à l'intérieur du corps d'accouplement, et le corps d'accouplement possède une surface de came interne effilée (19) dont le diamètre diminue en direction de l'extrémité ouverte (20), avec laquelle les doigts de la douille de serrage peuvent coopérer de façon à être comprimés contre la surface du tube afin de verrouiller le tube dans le corps d'accouplement.
